# FASCICULE DE BREVET EUROPEEN

(11) **EP 0 700 342 B1**
(45) Date de publication et mention de la délivrance du brevet: **20.01.1999**
(21) Numéro de dépôt: 95914429.6
(22) Date de dépôt: 28.03.1995
(51) Int. Cl.: B60S 1/08, G05B 19/19

(54) **Procédé, dispositif et installation d'asservissement d'un système physique entraîné par un moteur électrique sur une trajectoire déterminée**
Verfahren, Vorrichtung und Einrichtung zur Servosteuerung eines von einem Motor angetriebenen physikalischen Systems auf einer vorbestimmten Trajektorie
Method, Device and Installation of controlling a physical System driven by an electric Motor according to a defined Tajectory

(30) Priorité: 05.04.1994 FR 9404277
(43) Date de publication de la demande: 13.03.1996
(73) Titulaire: VALEO ELECTRONIQUE, 94042 Creteil Cédex (FR)
(72) Inventeur: AUTRAN, Frédéric, F-75018 Paris (FR); BESSIERE, Frédéric, F-75020 Paris (FR); LEVINE, Jean, F-75004 Paris (FR)
(74) Mandataire: Gamonal, Didier
(86) Numéro de dépôt international: FR9500384
(87) Numéro de publication internationale: WO9526893

(56) Documents cités:
- EP-A- 0 432 023
- EP-A- 0 544 001
- DE-A- 4 217 138
- FR-A- 2 541 639
- US-A- 4 742 285
- US-A- 4 866 357
- INTERNATIONAL JOURNAL OF VEHICLE DESIGN, vol. 12, no. 2, 1991, UK, pages 175 - 196, XP443988 CHIN ET AL 'Electronic windshield wiper system I : modelling and validation. and Electronic windshield wiper system II : control and sensitivity study'

## Description

La présente invention telle qu'elle est définie dans les revendications concerne un procédé d'asservissement d'un système comme un système d'essuyage de vitre de véhicule. Elle concerne aussi un dispositif d'asservissement mettant en oeuvre le procédé de l'invention, et une installation d'essuyage de vitre de véhicule, de type simultané ou synchronisé.

Elle apporte une solution aux problèmes posés par le développement de systèmes électromécaniques asservis, et particulièrement de systèmes d'essuyage de vitre de véhicule, comme le pare-brise avant ou la glace arrière du véhicule.

Du fait de l'environnement technique et économique particulier du marché de l'automobile, le développement de tout nouveau produit électromécanique destiné à équiper un véhicule doit répondre à des impératifs drastiques, notamment en termes de coûts, de délais de développement, de simplicité de fabrication, de mise en oeuvre et de maintenance.

Dans l'état de la technique, on connaît des systèmes d'essuyage comportant un moteur électrique d'entraînement, tel qu'un moteur à courant continu qui tourne toujours dans le même sens, et un mécanisme de transformation du mouvement de rotation du moteur en un mouvement alternatif d'un ou plusieurs balais racleurs. Un tel mécanisme de transformation est par exemple constitué par un dispositif de tringlerie à parallélogramme ou à embiellage intégré.

Mais les impératifs techniques de l'essuyage sont tels que les systèmes ainsi constitués doivent être développés spécialement pour chaque application particulière, c'est à dire pour chaque type de véhicule.

Ainsi, la forme du pare-brise, la nature des balais racleurs, la vitesse et l'aérodynamique du véhicule équipé sont des paramètres qui imposent le plus souvent de recommencer l'étude du système d'essuyage et de prévoir une nouvelle chaîne de fabrication industrielle dudit système.

Or, la fonction d'essuyage n'étant pas directement perceptible par le consommateur, le constructeur est conduit à tenter de minimiser le coût de cette fonction automobile, et le surcoût et le délai supplémentaire occasionnés ne sont donc pas admissibles.

Pour remédier à ces inconvénients, on a aussi proposé de concevoir un système asservi, dont la loi de commande est facilement adaptable à d'autres spécifications que celles imposées pour un produit déterminé.

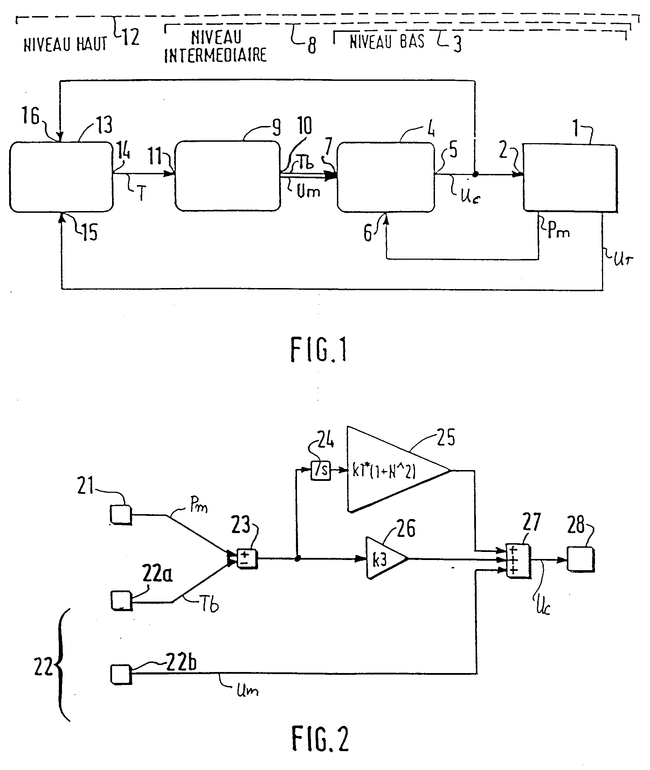

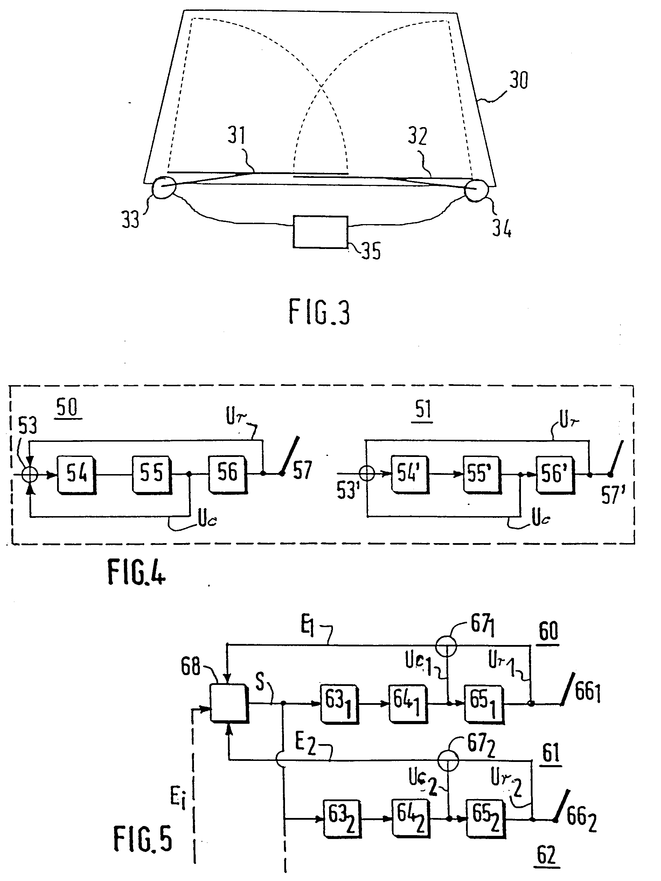

En particulier, dans un brevet français 2.655.301 (correspondant à EP-A-0 432 023), on a déjà proposé un dispositif de balayage asservi, notamment pour un système d'essuyage conforme à celui représenté en figure 3, dans lequel chaque balai 31 ou 32 est appliqué sur une vitre 30 et est actionné par un moteur électrique indépendant 33 ou 34, dont la loi de commande est préenregistrée dans une table de trajectoire qui est lue à une vitesse prédéterminée.

Avec un tel dispositif, on est capable de proposer des systèmes qui s'adaptent à des véhicules de divers types. En effet, il est possible de définir une loi de commande adaptée à chaque type de véhicule sous la forme d'un consigne préenregistrée dans une table, et sauvegardée dans une mémoire d'un calculateur 35.

De tels dispositifs, nécessitent cependant des précautions de commande pour garantir l'immunité du système vis à vis notamment des variations de charge auxquelles peut être soumis le balai d'essuie-glace.

En effet, la loi de commande doit tenir compte des perturbations extérieures appliquées au système physique, sans connaissance à priori de celles-ci. Il est donc nécessaire de définir un dispositif à la fois stable et robuste aux perturbations extérieures, ce qui est l'un des problèmes résolus par le présente invention.

De plus, dans les systèmes comportant plusieurs essuie-glaces pour l'essuyage du pare-brise, et sachant que deux essuie-glaces sont commandés de façon indépendante, il faut envisager le cas où ces deux essuie-glaces sont soumis à des contraintes différentes et risquent d'interférer. Il faut donc prévoir un circuit de blocage de la commande pour chacun d'eux, pour empêcher qu'il atteigne une position interdite, comme celle occupée par l'autre balai.

En effet, chaque balai d'essuyage est soumis à des perturbations extérieures qui peuvent être de nature ou d'amplitude différentes de l'un à l'autre. Par exemple la présence d'une feuille d'arbre collée sur la vitre dans le champs de balayage d'un des balais, ou l'existence d'un vent latéral peuvent induire des dissymétries dans les contraintes auxquelles sont soumis les deux balais. Ces dissymétries peuvent occasionner le ralentissement d'un des balais et provoquer une collision entre les balais, appelée interférence dans le langage de l'homme du métier.

Dans le brevet français 2.655.301 (EP-A-0 432 023) précité, on a proposé un moyen de pilotage qui engendre un signal de consigne pour une pluralité de balais par lecture de la table de trajectoire préenregistrée, ce moyen de pilotage étant bloqué si l'erreur de position d'au moins un des balais dépasse un seuil déterminé.

Cette solution, qui a donné satisfaction jusqu'à présent, est cependant encore imparfaite dans la mesure où elle engendre des 〈〈 à-coups 〉〉 dans le mouvement des balais. En effet, la dérivée du signal de consigne de position du balai, qui est à considérer pour rendre compte de l'évolution du système asservi au cours du temps (elle est en fait une indication de sa vitesse), est maintenue à la valeur nulle pendant toute la phase de blocage du moyen de pilotage, ce qui implique des difficultés pour assurer la stabilité du circuit d'asservissement.

C'est un objet de la présente invention que d'apporter une solution à ces problèmes de l'état de la technique, tant vis à vis de la commande d'un balai unique, que de celle d'une pluralité de balais dans le cadre d'une commande simultanée ou synchronisée.

En effet, l'invention concerne un procédé d'asservissement d'un système physique entraîné par un moteur électrique sur une trajectoire déterminée, notamment un balai d'un système d'essuyage de vitre de véhicule, dans lequel une consigne de position du système et une consigne de tension moteur sont préenregistrées dans des tables de mémoire, tel que défini par l'objet de la partie caractérisante de la revendication 1.

Ainsi, en cas de saturation de la commande du moteur, le déroulement des consignes est simplement ralenti et non plus bloqué comme dans l'art antérieur, ce qui facilite la stabilité de la boucle de rétroaction sur la position du système.

Selon d'autres caractéristiques de l'invention, prises isolément ou en combinaison :
- la modification de la vitesse de déroulement de la consigne consiste à lire les valeurs de la consigne enregistrée dans la table de mémoire à une seconde vitesse, plus lente que ladite première vitesse lorsque la charge du moteur électrique d'entraînement augmente;
- le rythme de lecture de la table de mémoire est donné par un signal de lecture qui est n fois dérivable, n étant égal à l'ordre du modèle adopté pour le système d'essuyage à asservir, de manière à éviter les à-coups ;

Selon la revendication 4, l'invention concerne aussi un dispositif de mise en oeuvre d'un tel procédé; comporte trois modules de commande correspondant à trois niveaux de commande :
- un module de commande de niveau bas fonctionnant en boucle fermée, et comportant un circuit de boucle stabilisante ainsi qu'un circuit d'alimentation électrique du moteur ;
- un module de commande de niveau intermédiaire, fonctionnant en boucle ouverte, comportant un circuit de génération des consignes du module de commande bas par lecture de ces consignes dans au moins une table de mémoire ;
- un module de commande de niveau haut, fonctionnant en boucle fermée, et comportant un circuit de modification des consignes appliquée au module de commande de niveau intermédiaire.

Selon une caractéristique de l'invention, le circuit de boucle stabilisante du module de commande de niveau bas est un circuit de bouclage proportionnel intégral (PI) rétroagissant sur la seule information de position du balai.

Selon une caractéristique de l'invention, les consignes comprennent au moins deux composantes qui sont :
- une consigne de position du balai ;
- une consigne de tension moteur.

Selon une caractéristique de l'invention, le circuit de modification des consignes du module de niveau haut comprend au moins deux entrées sur lesquelles il reçoit respectivement une tension de commande réelle du moteur généré par le circuit d'alimentation électrique du moteur et un signal de tension de commande du moteur généré par le circuit de boucle stabilisante du module de commande de niveau bas.

Selon une caractéristique de l'invention, le circuit de modification de la consigne du module de niveau haut comprend un circuit de calcul de l'intégrale d'ordre n par rapport au temps de la différence entre ladite tension de commande réelle du moteur et ledit signal de tension de commande du moteur, n étant l'ordre du modèle caractéristique du système asservi.

L'invention concerne enfin une installation d'essuyage de vitre de véhicule selon la revendication 7; cette installation de type simultané ou synchronisé comporte au moins un dispositif tel que décrit ci-dessus.

L'installation comporte au moins deux essuie-glaces commandés chacun par un dispositif asservi, chaque dispositif asservi comprenant :
- un module de modification des consignes ;
- un module de génération des consignes ;
- un circuit de boucle stabilisante respectivement ;
- un circuit d'alimentation électrique ;
- et un ensemble électromécanique;

Dans cette installation, à la sortie de chaque circuit de boucle stabilisante un signal de tension de commande est prélevé et transmis à l'entrée "+" d'un additionneur du module de modification des consignes;
à la sortie de chaque circuit d'alimentation électrique un signal de tension de commande réelle est prélevé et transmis à la borne d'entrée "-" de l'additionneur dudit module de modification des consignes;
chaque module de modification des consignes comporte un circuit calculant l'intégrale d'ordre n par rapport au temps, n étant l'ordre du modèle caractéristique des systèmes asservis, du signal existant en sortie de l'additionneur, ce circuit produisant un signal de lecture qui est couplé à l'entrée d'un module de synchronisation, dont la sortie produit un signal de lecture représentatif du rythme de déroulement des consignes qui doivent être appliqués à chaque module de génération des consignes.

C'est un avantage de l'invention de produire un suivi de précision et stable de la trajectoire de consigne.

C'est un autre avantage de la présente invention de produire un asservissement insensible à la charge et aux perturbations.

D'autres caractéristiques et avantages de la présente invention seront mieux compris à l'aide de la description et des dessins qui sont :
- la figure 1 : un schéma général d'un dispositif mettant en oeuvre le procédé de l'invention ;
- la figure 2 : un schéma d'un mode de réalisation préféré d'une partie du dispositif mettant en oeuvre le procédé de l'invention ;
- la figure 3 : un schéma d'un système d'essuyage de vitre de véhicule utilisant deux balais d'essuie-glace ;
- la figure 4 : un système asservi d'essuyage de vitre de véhicule en mode simultané ;
- la figure 5 : un système asservi d'essuyage de vitre de véhicule en mode synchronisé.

Les dessins représentés aux figures comportant pour l'essentiel des éléments de caractère certain, ils sont à considérer comme étant intégrés à la présente description, et pourront donc servir non seulement à compléter celle-ci, mais aussi, le cas échéant, pour contribuer à définir l'invention.

Dans un premier temps, nous allons décrire le principe de l'invention en ce qu'il s'applique à la commande d'un balai unique. Nous verrons ensuite, en regard des figures 3, 4 et 5 la manière dont il permet de résoudre le problème de la commande d'une pluralité de balais de façon à supprimer les risque d'interférence.

Le procédé d'asservissement selon l'invention, appliqué par exemple à l'asservissement en position d'un balai d'essuie-glace sur une vitre de véhicule, fait appel à la notion de système automatique et met en oeuvre une boucle de régulation, ou boucle d'asservissement, qui permet de commander le mouvement d'un balai et donc de maîtriser sa position instantanée.

Le système comporte ici plusieurs sous-systèmes qui sont : le balai constitué d'un bras et d'un racleur, le moteur électrique d'entraînement du balai, le réducteur du moteur, et la charge, celle-ci étant une composition des frottements du contact racleur/vitre et des forces aérodynamiques exercées sur le balai.

Un tel système se traite selon les lois de l'automatisme en choisissant un modèle de commande que l'on inverse pour définir un ensemble de consignes de commande qui sont utilisées pour générer des valeurs de commande. Le modèle de commande du système est défini par l'automaticien de manière à assurer l'asservissement du mécanisme commandé (ou système physique), ici un balai d'essuie-glace, sur une trajectoire déterminée.

Ainsi qu'il est bien connu de l'homme du métier, le système (système automatique) se caractérise par son ordre, noté n dans la suite. Le modèle d'un système d'ordre n est représenté de façon mathématique par une matrice d'ordre n, c'est à dire une matrice nxn. Cette matrice contient la valeur des coefficients ou paramètres du modèle, par exemple la valeur du gain du moteur considéré comme un amplificateur, la valeur du coefficient de raideur du balai, la valeur du rapport de réduction du réducteur, celle de l'inertie du moteur, etc... On l'appelle aussi matrice de transfert du système.

Les paramètres du modèle peuvent aussi être laissés sous forme de variables, dont les valeurs peuvent n'être spécifiées qu'ultérieurement pour tenir compte des conditions réelles de fonctionnement. Selon l'art antérieur, un tel paramètre dont la valeur n'est spécifiée qu'ultérieurement peut être le coefficient de frottement des balais sur la vitre, qui dépend notamment des conditions atmosphériques (givre, pluie ou temps sec,...), de l'usure des balais, etc... L'expression des consignes contient alors des variables, et leur valeur doit être calculée sur la base de données numériques correspondant à ces variables.

En effet, inverser le modèle pour générer les consignes revient à réaliser l'opération mathématique d'inversion de sa matrice de transfert. Cette opération produit une expression des consignes, sous forme d'expression arithmétique contenant des variables si la matrice du modèle en contient. Il est bien évident que l'inversion de la matrice nécessite la réalisation de certaines conditions mathématiques qui doivent être vérifiées, pour chaque variable du modèle, au moins pour un domaine de variation déterminé dit domaine de variation autorisé.

Or, dans l'art antérieur, il est connu d'utiliser dans le système asservi des boucles de rétroaction consistant à modifier la valeur des coefficients du modèle pour tenir compte des phénomènes non modélisés. Ces phénomènes peuvent d'ailleurs être des phénomènes aléatoires, non modélisables à priori. Dans le cas d'un système d'essuyage, ces phénomènes sont par exemple liés aux perturbations extérieures dues au vent, à la présence de saletés ou de givre sur la vitre, etc...

Il faut donc soit modifier la valeur des coefficients du modèle présents dans sa matrice de transfert et inverser à nouveau cette matrice pour obtenir la valeur des consignes directement, où bien calculer la valeur des consignes à partir de leur expression arithmétique contenant les variables suscitées.

Cette modification des coefficients du modèle, aussi appelée adaptation, présente deux inconvénients majeurs.

Le premier inconvénient réside dans la complexité des calculs d'inversion de matrice qui sont à réaliser à chaque adaptation et qui nécessitent une électronique ayant une puissance de calcul importante, donc chère, et ce proportionnellement au niveau de précision du modèle adopté pour le système physique.

Le second inconvénient, ayant en définitive les mêmes conséquences que le premier, réside dans le fait que la matrice de transfert du système, ou les expressions des consignes qui en découlent, peuvent évoluer vers des valeurs n'appartenant pas à leurs domaines de variations autorisés et correspondant à des zones d'instabilité du système physique (ceci se traduisant par la présence de pôles instables dans la matrice du modèle qui devient donc divergente). Par conséquent, et pour éviter la divergence du système, il est nécessaire de contrôler avec rigueur l'évolution des valeurs des coefficients du modèle de manière à les conserver éloignées des zones instables.

Cet impératif conduit à utiliser une régulation difficile à gérer avec les moyens de calcul limités dont on dispose pour une application automobile. En effet, le système de commande de l'essuyage doit être conçu autour d'un composant autonome bon marché tel qu'un microcontrôleur, dont les capacités de traitement ne permettent pas l'implémentation d'algorithmes trop compliqués.

C'est un objet de la présente invention que de proposer un procédé de commande d'un système asservi tel qu'un système d'essuyage de véhicule, qui soit insensible à la charge et aux perturbations extérieures sans mesures ni connaissances à priori de celles-ci, et sans adaptation des coefficients du modèle.

En effet le principe de l'invention consiste à faire varier la vitesse de déroulement de la consigne en fonction des difficultés rencontrées par le moteur, c'est à dire par le système asservi relativement à sa charge. Il évite ainsi d'avoir à modifier les coefficients du modèle.

Les consignes sont donc calculées préalablement, par exemple lors de la mise au point du dispositif en laboratoire après que le modèle de commande correspondant au système physique à asservir ait été défini.

Les consignes sont ensuite tabulées c'est à dire qu'elles sont enregistrées dans des tables de la mémoire d'un microcontrôleur qui constitue l'organe principal du dispositif d'essuyage selon l'invention.

L'avantage réside dans le fait que les consignes sont calculées une fois pour toutes, et ce, alors qu'il est possible d'utiliser les moyens de calcul importants communément employés en laboratoire. Par voie de conséquence, il est possible d'utiliser un modèle du système qui prennent en compte beaucoup de paramètres afin de parvenir à une modélisation plus fine du système réel. Cette complexité du modèle n'est plus un inconvénient selon l'invention puisque le modèle n'est inversé qu'une fois, en laboratoire, et qu'aucune adaptation de ses coefficients n'est ultérieurement réalisée.

Les consignes, produites en laboratoire par inversion du modèle du système sont donc tabulées. Dans le cadre de la commande du système physique, il ne reste qu'à lire les tables de mémoire contenant les consignes, et ce à une vitesse déterminée.

En effet, les adresses de ces tables sont lues séquentiellement en fonction d'un paramètre d'adressage, tel qu'il sera expliqué plus loin, de façon à modifier les consignes en fonction des perturbations. Dans la suite de la description, par l'expression modification de la consigne il conviendra de comprendre qu'il s'agit d'une modification de la vitesse de déroulement de la consigne, ou vitesse de lecture des tables, et non pas d'une modification des valeurs des paramètres du modèle du système.

Dans un mode de réalisation préféré, la consigne comporte deux composantes qui sont :
- la consigne Tb de position du balai d'une part ;
- la consigne Um de tension moteur d'autre part.

En fait, la trajectoire de consigne du balai, telle que définie dans le modèle adopté, peut inclure d'autres composantes que la seule consigne de position du balai. Ainsi, dans certains modes de réalisation possible de l'invention, on pourra remplacer la consigne Tb de position du balai par un vecteur de consigne de la trajectoire du balai qui inclura non seulement ladite consigne de position, mais aussi et de façon non limitative, une consigne de vitesse, une consigne d'accélération, etc.

Dans la suite, on notera t le temps réel du système imposé par les rythmes de l'horloge interne du microcontrôleur. De même, on notera T le temps de déroulement de la consigne, c'est à dire le rythme auquel les valeurs de consigne sont lues dans les tables de la mémoire du microcontrôleur, le procédé de l'invention consistant ainsi qu'il a été dit à modifier la valeur du temps de défilement T en fonction des perturbations extérieures au systèmes.

A la figure 1, on a représenté un schéma général d'un dispositif mettant en oeuvre le procédé de l'invention.

Ce dispositif comporte trois niveaux ayant chacun une fonction précise :
- un niveau bas 3, constituant une boucle de régulation tenant lieu de commande de niveau bas ;
- un niveau intermédiaire 8 dont le rôle est la génération des consignes pour la boucle de régulation du niveau bas ;
- et un niveau haut 12 constitué d'une boucle visant à modifier ces consignes.

Nous allons maintenant détailler le rôle et la structure de chacun de ces niveaux, en faisant référence à des modules de commande correspondant.

Le module de commande de niveau bas 3 du système asservi est d'une manière générale constitué d'une boucle fermée rétroagissant sur la valeur instantanée Pm de la position du balai. La boucle de niveau bas 3 comporte un circuit 4 dit circuit de boucle stabilisante et du système 1 qui est le système physique à asservir, c'est à dire ici l'ensemble formé notamment par le moteur, le réducteur et le balai.

Le système 1 comporte de plus un circuit d'alimentation électrique, ou circuit de puissance, dont une borne d'entrée de commande 2 est accessible, et qui est connectée aux bornes du moteur électrique à courant continu dont l'arbre de rotation est couplé au réducteur qui entraîne le balai racleur appliqué sur la vitre du véhicule.

Le circuit d'alimentation électrique, encore appelé amplificateur de commande ou ampli de commande, produit une onde bipolaire en impulsions modulées en largeur. La largeur de l'onde électrique d'alimentation détermine les valeurs du couple moteur et de la vitesse que l'on souhaite appliquer au balai en situation réelle. La polarité de l'onde électrique d'alimentation détermine le sens de rotation, et celui-ci est renversé à chaque extrémité de trajet sur la trajectoire du balai par inversion de la polarité de l'onde électrique d'alimentation.

Le circuit de boucle stabilisante 4 reçoit sur son entrée 7 les deux composantes Tb et Um de la consigne et produit sur sa sortie 5 un signal Uc de commande de la tension moteur destinée à l'entrée de commande du circuit d'alimentation électrique du moteur dans le système 1.

Selon un mode de réalisation préféré de l'invention, le circuit de boucle stabilisante 4 est un circuit de bouclage proportionnel et intégral et comporte trois bornes d'entrée qui sont :
- une borne d'entrée de la consigne Tb de position du balai transmise ;
- une borne d'entrée de la consigne Um de tension moteur ;
- une borne d'entrée d'un signal Pm de position moteur.

En effet le système 1 comporte aussi un capteur de position moteur qui produit un signal Pm en sortie du système.

Dans un mode de réalisation préféré, le capteur de position moteur est constitué par un capteur comportant deux cellules à effet Hall qui produisent un signal par mise en forme et combinaison logique convenable des deux signaux de sortie des cellules de façon à produire un signal représentatif de la position moteur, ainsi qu'éventuellement le sens de rotation du moteur.

Dans un autre mode de réalisation, le capteur de position du moteur est réalisé par un circuit de mesure de l'ondulation de courant traversant le moteur électrique dont on déduit l'information de vitesse du moteur. Un circuit intégrateur permet de retrouver l'information Pm de position du moteur, c'est à dire, de la position du balai sur sa trajectoire.

Dans un troisième mode de réalisation possible, on a exécuté l'observation de la position du moteur Pm par intégration de sa vitesse Vm, mesurée à l'aide d'un détecteur à effet Hall disposé sur l'arbre de sortie du moteur.

Le circuit 4 de boucle stabilisante comporte donc une borne d'entrée 6 du signal de position moteur Pm qu'il transforme en une information de position réelle du balai sur sa trajectoire réelle à l'aide d'un circuit observateur, dit aussi circuit reconstructeur, non représenté au dessin.

Dans un mode de réalisation simplifié, le circuit reconstructeur permettant de transformer l'information de position moteur Pm en une information de position balai est constitué par un simple multiplieur de gain 1/N, où N est le rapport du réducteur.

Dans un autre mode de réalisation, le multiplieur de gain 1/N est précédé d'un filtre de Kalman stationnaire qui dépend de la constante de couple Kc du moteur électrique et de la constante de raideur élastique Kb du porte balai.

L'information de saturation du circuit d'alimentation électrique est disponible en sortie du système 1 sous la forme du signal de la tension de commande réelle Ur.

A la figure 2, on a représenté un mode de réalisation préféré du circuit 4 de boucle stabilisante pour le module de commande bas 3 du dispositif mettant en oeuvre le procédé de l'invention.

Le circuit 4 de boucle stabilisante représenté à la figure 2 est un bouclage proportionnel intégral (PI) sur la seule information de position du balai obtenue en sortie du reconstructeur. Un tel circuit permet d'augmenter la stabilité de la partie lente du système asservi.

Le circuit de bouclage proportionnel intégral de la figure 2 comporte donc une borne d'entrée 21 de l'information de positions du balai reconstruite par le circuit reconstructeur à l'aide de la donnée de la position moteur Pm, appliquée à la borne d'entrée 6 du circuit de boucle stabilisante 4.

Il comporte aussi une borne d'entrée 22 connectée à la borne d'entrée 7 de la figure 1, et qui fournit au circuit de la figure 2 les deux valeurs de consigne instantanées Tb et Um nécessaires pour réaliser la commande du système 1 :
- la consigne Tb de position du balai est transmise sur une borne d'entrée 22a;
- la consigne Um de tension moteur est transmise sur une borne d'entrée 22b;
   Le circuit de bouclage proportionnel intégral comporte un soustracteur 23 dont la borne "+" reçoit l'information de position balai de la borne d'entrée 21 et dont la borne "-" reçoit la trajectoire de consigne balai (c'est à dire la consigne de position, dans le mode de réalisation simplifié de l'invention) reçue de la borne d'entrée 22a. La sortie du soustracteur 23 est connectée d'une part à l'entrée d'une cellule intégratrice 24 et d'autre part à un multiplieur de gain k3 référencé 26 au dessin.

La sortie de l'intégrateur 24 est connecté à un multiplieur de gain k1*(1+N^2), référencé 25, dans lequel N^2 représente l'élévation au carré du rapport de réduction N, caractéristique du réducteur couplé à l'arbre du moteur.

Le circuit de boucle stabilisante de la figure 2 comporte aussi un additionneur 27 dont les bornes d'entrée sont respectivement connectées à la borne de sortie du multiplieur 25, à la borne de sortie du multiplieur 26 et à la borne d'entrée 22b qui reçoit la consigne Um de tension moteur.

La borne de sortie de l'additionneur 27 est connectée à la borne de sortie 28 du circuit de boucle stabilisante de la figure 2 qui produit le signal Uc de commande de la tension moteur.

En revenant à la figure 1, le signal Uc de commande de la tension moteur est disponible en sortie 5 (analogue à la sortie 28 de ce circuit représenté à la figure 2) du circuit de boucle stabilisante 4. Il est transmis d'une part à l'entrée 2 du circuit d'alimentation électrique du système physique 1, et d'autre part au circuit de modification des consignes 13 dont le rôle est détaillé ci-après dans le cadre du module de commande de niveau haut.

A la figure 1, on a aussi représenté le module de commande du niveau intermédiaire 8 qui fonctionne en boucle ouverte et qui comporte un circuit 9 de génération des consignes que ce circuit produit sur sa borne de sortie 10.

Le circuit 9 de génération des consignes produit préférentiellement les grandeurs instantanées de consigne Tb de position du balai et de consigne Um de tension moteur.

Ainsi qu'il a été dit, la génération des consignes consiste selon l'invention à lire les valeurs instantanées des consignes Tb et Um dans les tables préenregistrées. La lecture de ces tables se fait au rythme d'un signal de lecture T qui est appliqué à la borne d'entrée 11 du circuit 9 de génération des consignes.

Le système asservi de la figure 1 comporte enfin un module de commande du niveau haut 12 qui fonctionne en boucle fermée en prenant comme signaux de retour, d'une part la tension de commande réelle Ur produite par le circuit d'alimentation électrique et d'autre part le signal Uc de commande de tension moteur produit par le circuit de boucle stabilisante.

Le signal Ur est reçu sur une première borne d'entrée 15 du circuit 13 de modification des consignes, et le signal Uc est reçu sur une seconde entrée 16 dudit circuit 13.

Le circuit 13 de modification des consignes produit sur sa borne de sortie 14 un signal de modification des consignes à destination du circuit 9 de génération des consignes du module de commande du niveau intermédiaire 8. Ainsi qu'il a déjà été dit, ce signal est, selon l'invention, un signal de lecture T des tables contenant les valeurs instantanées des consignes. Ce signal T détermine la vitesse de déroulement de la consigne et permet d'accéder au temps de déroulement de celle-ci.

On a constaté que, pour que les modifications de la consigne, c'est à dire de la vitesse de déroulement de la consigne, se produisent sans à-coups, il était nécessaire que le signal de lecture T soit n fois dérivable par rapport au temps réel, n étant toujours égal à l'ordre du système.

Les à-coups dans la variation de la vitesse de déroulement de la consigne se traduiraient par des à-coups dans le mouvement du balai sur la vitre.

Dans un exemple de réalisation préféré de l'invention, le système est d'ordre 4. Il est donc nécessaire que le signal de lecture T soit 4 fois dérivable par rapport au réel t.

Dans la pratique toutefois, il se peut que les coefficients apparaissant devant certains termes de la dérivée de T d'ordre supérieur ou égal à deux soient tellement faibles qu'il est possible de les négliger.

Afin d'être certain d'avoir un signal de lecture T qui soit dérivable 4 fois par rapport au temps t, et qui soit fonction de le charge il est apparu avantageux de définir le signal de lecture T comme l'intégrale quatrième de l'écart entre la commande théorique et la commande réelle du moteur. En cas de saturation, celle-ci est en général la valeur maximale de la commande réellement appliquée au système.

Ainsi, le circuit 13 de modification des consignes tient compte de l'apparition de perturbations, notamment celles liées à l'augmentation brutale des frottements liés au déplacement du balai sur la vitre.

Lorsque la charge appliquée au système diminue ensuite pour revenir à une valeur conforme à celle définie dans le modèle adopté, l'écart entre la commande théorique Uc et la commande réelle Ur du moteur diminue et la valeur du signal de lecture T tend vers une valeur T0 ou valeur de référence c'est à dire en l'absence de perturbations extérieures. Cette valeur T0 est par exemple définie comme la valeur d'au moins une constante d'intégration utilisée dans le calcul du signal de lecture T.

Afin d'expliquer le déroulement du procédé de l'invention nous allons considérer l'exemple suivant.

Supposons que la consigne Um de tension de commande du moteur soit, à l'instant considéré, égale à 10 volts, c'est à dire qu'il soit inscrit dans les tables que, à cet instant déterminé et pour réaliser la consigne Tb de position du balai, le moteur doit théoriquement être alimenté sous 10 volts.

Supposons de plus que, du fait d'une perturbation extérieure telle que par exemple la présence de neige sur le pare-brise, le balai soit soumis à une charge élevée, c'est à dire en tout état de cause plus élevée que celle prévue pour cet instant du cycle de balayage par le modèle du système adopté initialement.

Pour maintenir une trajectoire réelle conforme à la consigne Tb de position du balai, la boucle stabilisante de niveau bas va générer un signal Uc de commande du moteur égal par exemple à 14 volts. Cela signifie que, pour vaincre la charge appliquée au balai, le moteur électrique doit en réalité être alimenté sous 14 volts et non pas sous 10 volts comme prévu par la consigne Um de tension de commande du moteur.

Supposons enfin que la tension de la batterie soit, à cet instant, égale à 12 volts. Le circuit d'alimentation électrique du moteur sera incapable de générer une tension de commande réelle Ur supérieure à 12 volts, cette valeur constituant une valeur de saturation du circuit d'alimentation électrique du moteur.

La différence l'écart entre la tension de 14 volts requise d'une part et la tension de 12 volts disponible d'autre part constitue un signal d'erreur sur la base duquel le temps de déroulement des consignes va être modifié selon le principe de l'invention.

Le déroulement de la consigne ralentit lorsque le moteur peine, lorsqu'il y de fortes charges qui sont reconnues par la saturation de la commande du moteur.

La modification de la vitesse de déroulement de la consigne consiste à lire les valeurs de la consigne enregistrée dans la table de mémoire à une seconde vitesse, plus lente que ladite première vitesse lorsque la charge du moteur électrique d'entraînement augmente au point que la commande du moteur soit saturée.

Le déroulement de la consigne est maintenu à vitesse constante (liée au temps T0 de déroulement de référence) lorsque la commande du moteur n'est pas saturée.

A la figure 3 déjà décrite, on a représenté un dispositif d'essuyage comportant deux essuie-glaces indépendants 31 et 32. Le procédé d'asservissement selon l'invention s'applique avantageusement à la commande des balais d'un tel dispositif. Il est possible de commander ce dispositif d'essuyage selon deux modes différents, dits mode simultané et mode synchronisé.

Le mode simultané est tel que la commande de chaque balai est complètement indépendante de la commande de l'autre balai, chacune des lois de commande étant telle qu'elle prend en compte la gestion des perturbations extérieures.

Le mode synchronisé est tel que la commande de chaque balai est asservie en fonction notamment d'au moins une information sur le comportement de l'autre balai de manière à asservir la commande de chaque balai en intégrant un paramètre lié au comportement de l'autre balai. Le mode synchronisé permet une meilleure gestion des problèmes d'interférence.

A la figure 4, on a représenté un schéma d'un système asservi d'essuyage de vitre de véhicule mettant en oeuvre le procédé de l'invention dans le cadre d'une commande en mode simultané.

Le système d'essuyage comporte, pour chaque essuie-glace 50 ou 51, un module de modification des consignes 53 ou 53', un module de génération des consignes 54 ou 54', un circuit de boucle stabilisante 55 ou 55', un circuit d'alimentation électrique 56 ou 56' du système physique, et ledit système physique ou ensemble électromécanique 57 ou 57'. Cet ensemble électromécanique comprend un moteur électrique, un réducteur mécanique, un balai racleur et une charge constituée par l'application du balai racleur sur la vitre en cours d'essuyage.

A la sortie du circuit de boucle stabilisante 55 ou 55', un signal de tension de commande du moteur Uc est prélevé et transmis à l'entrée "+" d'un additionneur du module de modification des consignes 53 ou 53'.

A la sortie du circuit d'alimentation électrique 56 ou 56', un signal de tension de commande réelle Ur est prélevé et transmis à la borne d'entrée "-" de l'additionneur du module de modification des consignes 53 ou 53'.

Le signal d'erreur produit en sortie de l'additionneur est intégré quatre fois (pour un système d'ordre 4) pour produire le signal de lecture des tables de mémoires contenant les valeur de la consigne. Ce signal de lecture détermine la vitesse de déroulement de la consigne, et est transmis à l'entrée du module 54 de génération de la consigne.

A la figure 5, on a représenté l'application de l'invention à un système d'essuyage commandé en mode synchronisé.

Selon un aspect de l'invention, deux ou trois balais sont prévus, chacun entraîné par son propre moteur. On tient compte de l'état de chaque balai de façon à commander la génération de la loi de commande de façon synchronisée par rapport aux autres balais.

Ainsi, le système d'essuyage comporte une pluralité de systèmes asservis 60, 61, 62, ... montés en parallèle.

Chaque système asservi est tel que ceux représenté à la figure 4 et comporte, selon les notations de la figure 5 :
- un module de modification de la vitesse de déroulement des consignes respectivement 67₁, 67₂, 67ᵢ,...;
- un module de génération des consignes respectivement 63₁, 63₂, 63ᵢ,...;
- un circuit de boucle stabilisante respectivement 64₁, 64₂, 64ᵢ,...;
- un circuit d'alimentation électrique respectivement 65₁, 65₂, 65ᵢ du système physique ;
- et un ensemble électromécanique respectivement 66₁, 66₂, 66ᵢ,...;
   A la sortie de chaque circuit de boucle stabilisante 64ᵢ un signal Ucᵢ de tension de commande est prélevé et transmis à l'entrée "+" d'un additionneur du module de modification des consignes 67ᵢ.

De même, à la sortie de chaque circuit d'alimentation électrique 65ᵢ un signal Urᵢ de tension de commande réelle est prélevé et transmis à la borne d'entrée "-" de l'additionneur du module de modification des consignes 67ᵢ précité.

Ainsi qu'il a été expliqué précédemment, lorsque la charge des balais est importante le signal Urᵢ de tension de commande réelle est typiquement égal à la valeur de saturation du circuit d'alimentation électrique du moteur.

Chaque signal de lecture Eᵢ, produit en sortie de l'additionneur de chaque module de modification des consignes 67ᵢ, est couplé à l'entrée d'un module de synchronisation 68, dont la sortie produit un signal de lecture S déterminant le rythme de déroulement de la consigne qui doit être appliqué à chaque module de génération des consignes 63ᵢ.

Ainsi le signal de lecture S est commun à tous les systèmes asservis 60, 61, 62, ... montés en parallèle.

Le module de synchronisation 68 est un circuit de détection de la valeur minimum des signaux de lecture Eᵢ appliqués à ses entrées, et de recopie de cette valeur minimum sur sa sortie. Ainsi le signal S permet de commander le déroulement de toutes les consignes à une vitesse correspondant à la vitesse la plus faible, requise par l'un quelconque des balais pour vaincre la charge à laquelle il est soumis.

Selon un autre mode de réalisation possible de l'invention, le module de synchronisation peut travailler directement sur l'ensemble des signaux d'erreur constitué par la différence entre les signaux Ucᵢ de tension de commande et Urᵢ de tension de commande réelle.

Selon ce mode de réalisation le module commun de synchronisation reçoit le signal d'erreur issu de la borne de sortie de l'additionneur de chaque module de modification de la consigne et assure la synchronisation par détermination et recopie du plus grand signal d'erreur, sa valeur étant retransmise à l'entrée de commande de chacun des modules 67ᵢ de modification de la consigne.

La présente invention a été décrite dans le cadre d'un système d'essuyage. Mais il est clair qu'elle trouve application pour tout système asservi et particulièrement pour tout système électromécanique.

## Revendications

1. Procédé d'asservissement d'un système physique entraîné par un moteur électrique (33,34) sur une trajectoire déterminée, notamment un balai (31,32) d'un système d'essuyage de vitre de véhicule, dans lequel une consigne de position du système (Pb) et une consigne de tension moteur (Um) sont préenregistrées dans des tables de mémoire, et, dans lequel,
lors du déroulement des consignes, celles-ci sont lues séquentiellement dans lesdites tables de mémoire à une vitesse déterminée par un signal de lecture (T),
et comprenant les étapes suivantes :
a) déroulement des consignes à une première vitesse déterminée, et génération d'un signal (Uc) de commande en tension du moteur sur la base desdites consignes de façon à réaliser un retour d'état stabilisant sur la position du système ;
b) détection d'une condition de saturation d'un circuit d'alimentation électrique du moteur, définie par un écart entre la valeur du signal (Uc) de commande en tension du moteur et la tension de commande réelle (Ur) du moteur ;
c) lorsqu'une condition de saturation est détectée, modification du signal de lecture (T) en fonction de l'écart entre le signal (Uc) de commande en tension du moteur et la tension de commande réelle (Ur) du moteur, de telle sorte que le déroulement des consignes est effectué à une seconde vitesse, plus lente que ladite première vitesse.

2. Procédé selon la revendication 1 caractérisé en ce que le signal de lecture des tables de mémoire est n fois dérivable, n étant égal à l'ordre du modèle adopté pour le système.

3. Procédé selon la revendication 2 caractérisé en ce que le signal de lecture est défini comme l'intégrale d'ordre n de l'écart entre le signal (Uc) de commande en tension du moteur et la tension de commande réelle du moteur (Ur).

4. Dispositif pour la mise en oeuvre d'un procédé d'asservissement selon l'une quelconque des revendications précédentes, caractérisé en ce qu'il comporte :
- un module (3) de commande de niveau bas fonctionnant en boucle fermée, et comprenant un circuit de boucle stabilisante (4 ; 64₁,64₂,64ᵢ) qui génère le signal (Uc) de commande en tension du moteur transmis à un circuit d'alimentation électrique du moteur qui génère la tension de commande réelle (Ur) du moteur ;
- un module (8) de commande de niveau intermédiaire, fonctionnant en boucle ouverte, qui reçoit le signal de lecture (T) sur une entrée (11) et qui comporte un circuit (9 ; 63₁,63₂,63ᵢ) de génération des consignes (Tb,Um) fonctionnant par lecture desdites consignes dans des tables de mémoire au rythme du signal de lecture (T), lesdites consignes étant transmises sur des entrées (7 ; 22a,22b) du circuit de boucle stabilisante (4) du module (3) de commande de niveau bas ;
- un module (12) de commande de niveau haut, fonctionnant en boucle fermée, et comprenant un circuit (13 ; 67₁,67₂,67ᵢ) de modification de la vitesse de déroulement des consignes qui comporte une première entrée (15) sur laquelle il reçoit la tension de commande réelle (Ur) du moteur générée par le circuit d'alimentation électrique du moteur, une seconde entrée (16) sur laquelle il reçoit le signal (Uc) de commande en tension du moteur généré par le circuit (4) de boucle stabilisante du module de commande de niveau bas (3) ainsi qu'une sortie (14) sur laquelle est produit, en fonction de la différence entre la tension de commande réelle (Ur) et le signal (Uc) de commande en tension du moteur, le signal de lecture (T) des consignes qui est transmis sur une entrée (11) du circuit (9) de génération des consignes du module (8) de commande de niveau intermédiaire.

5. Dispositif selon la revendication 4, caractérisé en ce que le circuit de boucle stabilisante (4) du module (3) de commande de niveau bas est un circuit de bouclage proportionnel intégral (PI) rétroagissant sur la seule information de position du système.

6. Dispositif selon la revendication 4, caractérisé en ce que le circuit de modification de la consigne du module de niveau haut (12) comprend un circuit de calcul de l'intégrale d'ordre n par rapport au temps (t) de la différence entre la tension de commande réelle (Ur) et le signal (Uc) de commande en tension du moteur, n étant l'ordre du modèle caractéristique du système asservi.

7. Installation d'essuyage de vitre de véhicule, caractérisée en ce qu'elle comporte un dispositif selon l'une des revendications 4 à 6 pour l'asservissement d'un système physique comprenant un balai d'essuyage entraîné par un moteur électrique par l'intermédiaire d'un réducteur mécanique.

8. Installation d'essuyage du type synchronisée, caractérisée en ce qu'elle comporte au moins deux dispositifs selon l'une des revendications 4 à 6 pour l'asservissement de deux systèmes physiques comprenant chacun un balai d'essuyage entraîné par un moteur électrique par l'intermédiaire d'un réducteur mécanique,
et en ce que les signaux de lecture (Eᵢ) qui sont produits en sortie des modules de modification de la vitesse de lecture des consignes (67ᵢ) de chaque dispositif sont transmis en entrée d'un module de synchronisation (68) qui détecte la valeur minimum des signaux de lecture (Ei) et la recopie sur une sortie de manière à produire sur cette sortie un signal de lecture (S) commun qui est transmis en entrée des modules de génération des consignes (63ᵢ) de chaque dispositif.

## Claims

1. A method for governing a physical system driven by an electric motor (33, 34) along a predetermined trajectory, in particular a blade (31, 32) of a system for wiping a glass surface of a vehicle, in which a command signal (Pb) for the position of the system and a motor voltage command signal (Um) are pre-recorded in memory tables, and in which, during the propagation of the command signals, the latter are read sequentially in the said memory tables at a rate which is determined by a reading signal (T),
and comprising the following steps:
(a) propagation of the command signals at a first predetermined rate, and generation of a voltage command signal (Uc) for the motor on the basis of the said command signals in such a way as to effect a reversion of the position of the system to a stable state;
(b) detection of a saturation condition of an electrical power supply circuit for the motor, defined by a difference between the value of the voltage control signal (Uc) of the motor and the actual control voltage (Ur) of the motor;
(c) when a saturation condition is detected, modification of the reading signal (T) as a function of the difference between the voltage control signal (Uc) of the motor and the actual control voltage (Ur) of the motor, in such a way that the propagation of the command signals is effected at a second rate slower than the said first rate.

2. A method according to Claim 1, characterised in that the signal for reading the memory tables is derivable n times, n being equal to the order of the model adopted for the system.

3. A method according to Claim 2, characterised in that the reading signal is defined as the integral of order n of the difference between the voltage control signal (Uc) of the motor and the actual control voltage (Ur) of the motor.

4. Apparatus for performing a method of governing according to any one of the preceding Claims, characterised in that it includes:
- a low level control module (3) operating as a closed loop and comprising a stabilising loop circuit (4; 64₁, 64₂, 64ᵢ) which generates the voltage control signal (Uc) of the motor transmitted to an electrical power supply circuit for the motor which generates the actual control voltage (Ur) of the motor;
- an intermediate level control module (8) operating as an open loop, which receives the reading signal (T) on an input (11) and which comprises a circuit (9; 63₁, 63₂, 63ᵢ) for generating command signals (Tb, Um) operating by reading the said command signals in memory tables in synchronism with the reading signal (T), the said command signals being transmitted to inputs (7; 22a, 22b) of the stabilising loop circuit (4) of the low level control module (3);
- a high level control module (12) operating in a closed loop and comprising a circuit (13; 67₁, 67₂, 67ᵢ) for modifying the rate of propagation of the command signals, which has a first input (15) on which it receives the actual control voltage (Ur) for the motor generated by the electrical power supply circuit of the motor, a second input (16) on which it receives the voltage control signal (Uc) for the motor generated by the stabilising loop circuit (4) of the low level control module (3), together with an output (14) on which there is produced, as a function of the difference between the actual control voltage (Ur) and the voltage control signal (Uc) of the motor, the signal (T) for reading the command signals which is transmitted to an input (11) of the command signal generating circuit (9) of the intermediate level control module (8).

5. Apparatus according to Claim 4, characterised in that the stabilising loop circuit of the low level control module (3) is an integral proportional (IP) loop circuit acting in feedback mode on the single information signal representing the position of the system.

6. Apparatus according to Claim 4, characterised in that the modification circuit for the command signal of the high level module (12) comprises a circuit for computing the integral, of order n with respect to time (t), of the difference between the actual control voltage (Ur) and the voltage control signal (Uc) of the motor, n being the order of the model which is characteristic of the governed system.

7. A wiping installation for a glass surface of a vehicle, characterised in that it includes an apparatus according to one of Claims 4 to 6 for governing a physical system comprising a wiper blade driven by an electric motor through a mechanical speed reducer.

8. A wiping installation of the synchronised type, characterised in that it includes at least two apparatuses according to one of Claims 4 to 6, for governing two physical systems each comprising a wiper blade driven by an electric motor through a mechanical speed reducer,
and in that the reading signals (Eᵢ) which are produced as outputs of the modules for modification of the rate of reading of the command signals (67ᵢ) of each apparatus are transmitted as input to a synchronising module (68) which detects the minimum value of the reading signals (Eᵢ) and copies it on an output, in such a way as to produce on the said output a common reading signal (S) which is transmitted as input to the modules for generating the command signals (63ᵢ) of each apparatus.

## Patentansprüche

1. Verfahren zur Regelung eines physikalischen Systems, das durch einen Elektromotor (33, 34) auf einer bestimmten Bahn angetrieben wird, insbesondere eines Wischerblatts (31, 32) eines Scheibenwischersystems für ein Fahrzeug, bei dem eine Führungsgröße für die Position des Systems (Pb) und eine Führungsgröße für die Motorspannung (Um) in Speichertabellen vorgespeichert sind und bei dem während des Ablaufs der Führungsgrößen diese sequentiell in den besagten Speichertabellen mit einer durch ein Lesesignal (T) bestimmten Geschwindigkeit gelesen werden, und das die folgenden Schritte umfaßt:
a) Ablauf der Führungsgrößen mit einer bestimmten ersten Geschwindigkeit und Erzeugung eines Signals (Uc) für die Spannungssteuerung des Motors auf der Grundlage der besagten Führungsgrößen, um die Wiederherstellung eines Stabilisierungszustands in bezug auf die Position des Systems herbeizuführen;
b) Erfassung einer Sättigungsbedingung einer Stromversorgungsschaltung des Motors, die durch eine Abweichung zwischen dem Wert des Signals (Uc) für die Spannungssteuerung des Motors und der effektiven Steuerspannung (Ur) des Motors definiert ist;
c) wenn eine Sättigungsbedingung erfaßt wird, Änderung des Lesesignals (T) in Abhängigkeit von der Abweichung zwischen dem Signal (Uc) für die Spannungssteuerung des Motors und der effektiven Steuerspannung (Ur) des Motors, so daß der Ablauf der Führungsgrößen mit einer zweiten Geschwindigkeit erfolgt, die langsamer als die besagte erste Geschwindigkeit ist.

2. Verfahren nach Anspruch 1 , **dadurch gekennzeichnet,** daß das Lesesignal für das Lesen der Speichertabellen n-mal ableitbar ist, wobei n gleich der Ordnung des für das System zugrundegelegten Modells ist.

3. Verfahren nach Anspruch 2 , **dadurch gekennzeichnet,** daß das Lesesignal als das Integral n-ter Ordnung der Abweichung zwischen dem Signal (Uc) für die Spannungssteuerung des Motors und der effektiven Steuerspannung des Motors (Ur) definiert ist.

4. Vorrichtung zur Anwendung eines Regelungsverfahrens nach einem der vorangehenden Ansprüche, **dadurch gekennzeichnet,** daß sie folgendes umfaßt:
- ein Steuerungsmodulmodul (3) der unteren Steuerungsebene, das in einem geschlossenen Wirkungskreis arbeitet und eine Stabilisierungskreisschaltung (4; 64ᵢ, 64₂, 64ᵢ) umfaßt, die das Signal (Uc) für die Spannungssteuerung des Motors erzeugt, das an eine Stromversorgungsschaltung des Motors übertragen wird, die die effektive Steuerspannung (Ur) des Motors erzeugt;
- ein in einem offenen Wirkungskreis arbeitendes Steuerungsmodul (8) der mittleren Steuerungsebene, das das Lesesignal (T) an einem Eingang (11) empfängt und das eine Schaltung (9; 63₁, 63₂, 63ᵢ) zur Erzeugung der Führungsgrößen (Tb, Um) umfaßt, die durch das Lesen der besagten Führungsgrößen in Speichertabellen nach dem Takt des Lesesignals (T) arbeitet, wobei die besagten Führungsgrößen an Eingänge (7; 22a, 22b) der Stabilsierungskreisschaltung (4) des Steuerungsmoduls (3) der unteren Steuerungsebene übertragen werden;
- ein in einem geschlossenen Wirkungskreis arbeitendes Steuerungsmodul (12) der oberen Steuerungsebene, das eine Schaltung (13; 67₁, 67₂, 67ᵢ) zur Änderung der Ablaufgeschwindigkeit der Führungsgrößen enthält, die einen ersten Eingang (15), an dem sie die durch die Stromversorgungsschaltung des Motors erzeugte effektive Steuerspannung (Ur) des Motors empfängt, einen zweiten Eingang (16), an dem sie das durch die Stabilisierungskreisschaltung (4) des Steuerungsmoduls der unteren Steuerungsebene (3) erzeugte Signal (Uc) für die Spannungssteuerung des Motors empfängt, sowie einen Ausgang (14) umfaßt, an dem in Abhängigkeit von der Differenz zwischen der effektiven Steuerspannung (Ur) und dem Signal (Uc) für die Spannungssteuerung des Motors das Lesesignal (T) für die Führungsgrößen erzeugt wird, das an einen Eingang (11) der Schaltung (9) zur Erzeugung der Führungsgrößen des Steuerungsmoduls (8) der mittleren Steuerungsebene übertragen wird.

5. Vorrichtung nach Anspruch 4, **dadurch gekennzeichnet,** daß die Stabilisierungskreisschaltung (4) des Steuerungsmoduls (3) der unteren Steuerungsebene eine Proportional-Integral-Regelungsschaltung (PI) ist, die nur auf die Positionsinformation des Systems zurückwirkt.

6. Vorrichtung nach Anspruch 4, **dadurch gekennzeichnet,** daß die Schaltung zur Änderung der Führungsgröße des Steuerungsmoduls der oberen Steuerungsebene (12) eine Schaltung zur Berechnung des auf die Zeit (t) bezogenen Integrals n-ter Ordnung der Differenz zwischen der effektiven Steuerspannung (Ur) und dem Signal (Uc) für die Spannungssteuerung des Motors umfaßt, wobei n die Ordnung des für das Regelsystem charakteristischen Modells ist.

7. Scheibenwischeranlage für ein Fahrzeug , **dadurch gekennzeichnet**, daß sie eine Vorrichtung nach einem der Ansprüche 4 bis 6 zur Regelung eines physikalischen Systems enthält, das ein Scheibenwischerblatt umfaßt, das durch einen Elektromotor über ein mechanisches Untersetzungsgetriebe angetrieben wird.

8. Scheibenwischeranlage in synchronisierter Ausführung, **dadurch gekennzeichnet**, daß sie mindestens zwei Vorrichtungen nach einem der Ansprüche 4 bis 6 zur Regelung von zwei physikalischen Systemen enthält, die jeweils ein Scheibenwischerblatt umfassen, das durch einen Elektromotor über ein mechanisches Untersetzungsgetriebe angetrieben wird, und daß die am Ausgang der Module zur Änderung der Lesegeschwindigkeit der Führungsgrößen (67ᵢ) jeder Vorrichtung erzeugten Lesesignale (Eᵢ) an den Eingang eines Synchronisiermoduls (68) übertragen werden, das den Minimalwert der Lesesignale (Eᵢ) erfaßt und ihn an einem Ausgang umkopiert, um an diesem Ausgang ein gemeinsames Lesesignal (S) zu erzeugen, das an den Eingang der Module zur Erzeugung der Führungsgrößen (63ᵢ) jeder Vorrichtung übertragen wird.
